# EUROPEAN PATENT APPLICATION

(11) **EP 1 753 245 A2**
(43) Date of publication of application: **14.02.2007**
(21) Application number: 06024745.9
(22) Date of filing: 24.10.1996
(51) Int. Cl.: H04N 7/26

(54) **Method of generating object-adaptive code block pattern**

(30) Priority: 26.10.1995 KR 19950037918; 05.10.1996 KR 19960044049
(62) Divisional of application: 96117090.9
(71) Applicant: Hyundai Curitel, Inc., Bubal-eup Ichon-shi Kyonggi do (KR)
(72) Inventor: Lee, Jin-Hak, Taejon (KR); Park, Kwan-Hoon, Inchon (KR); Moon, Joo-Hee, Kwangjin-ku, Seoul (KR); Kim, Jae-Kyoon, Seoul (KR); Chun, Sung-Moon, Seoul (KR)
(74) Representative: Haug, Dietmar

(57) **Abstract**

A method of generating an object adaptive code block pattern wherein different variable length coding tables for block pattern are applied according to the number of unit blocks where an object is present in case it is selectively present in the unit blocks of respective macro blocks where a frame of image is divided, to thereby reduce the amount of data transmitted.

## Description

### BACKGROUND OF THE INVENTION

### Field of the Invention

The present invention relates to a method of generating an object-adaptive code block pattern in a system of coding an object and, more particularly, to a method of generating an object-adaptive code block pattern in which different variable length coding tables for block pattern are applied according to the number of blocks where the object is present, to thereby enhance the efficiency of reduction of data transmitted, and its coding gain.

### Discussion of Related Art

Generally speaking, H.261 which offers services of video phone or video conference using ISDN and H.263 for video phone service using PSTN are suggested for international standardization. However, with H.261 and H.263 providing very low-bit rate motion pictures like video phone, the quality of picture is poor, which should be raised to higher level. Meanwhile, for motion picture-related technology, MPEG1 for DSM (digital storage media) and MPEG2 for DSM, HDTV and ATV are standardized.

H.261, H.263, MPEG1, and MPEG2 employ a coding on basis of block, with which, however, decrease in the quality of picture predominates to the application of very low bit rate transmission. To avoid this problem, MPEG4 is trying to find a new approach fully different from the conventional methods, and standardization is under way with a block based coding to which the concept of object is introduced.

An object-oriented coding, one of the codings, is based on an object moving between two images not on blocks, and codes by dividing the entire image into background, uncovered region, MC(Model Compliance) region, and MF(Model Failure) region. Here, MC object represents an object transformed into two dimension from three dimension and moving according to rules like horizontal movement, rotation movement and linear transformation. MF object is an object to which the above rules are not applied.

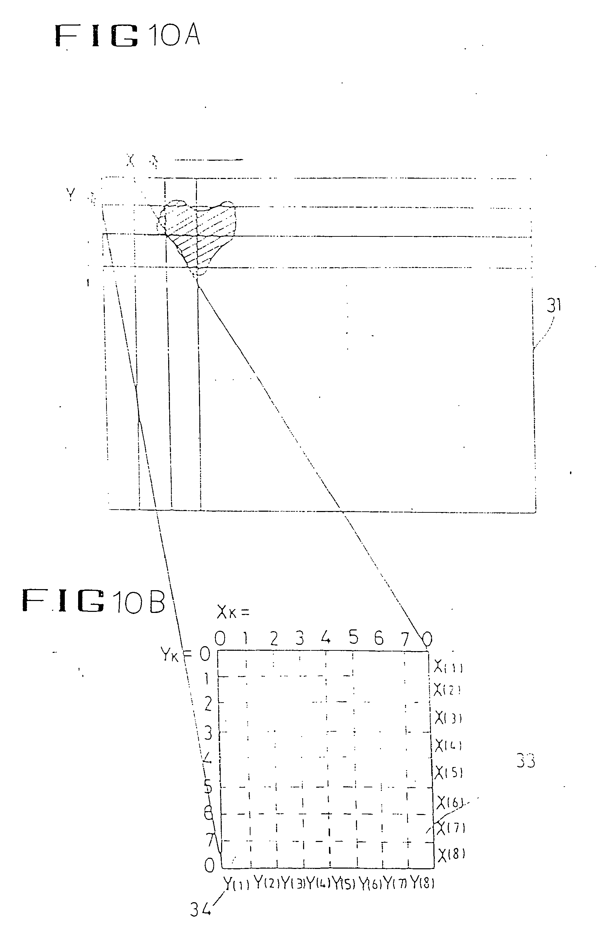

FIGS. 10A and 10B show the relation of unit block 33 in frame grid 31. FIG. 10A shows a frame grid whose start point is X=0, Y=0. FIG. 10B shows a unit block enlarged, which is divided into eight along the X axis and Y axis. The divided elements are called pixels 34. Unit block 33 is called NxM block according to the number of pixels. FIG. 10B shows 8x8 block.

A conventional object-oriented method used to code object divided as above will be described below with reference to FIG. 9.

The frame grid has an 8x8 block. If an MF object fills the block, then its efficiency is equal to two-dimensional DCT (discrete cosine transform), and if not, only a corresponding portion of the MF object is one-dimensionally DCT-transformed along the X axis, and then one-dimensionally DCT-transformed along the Y axis. This conventional method will be explained below in more detail.

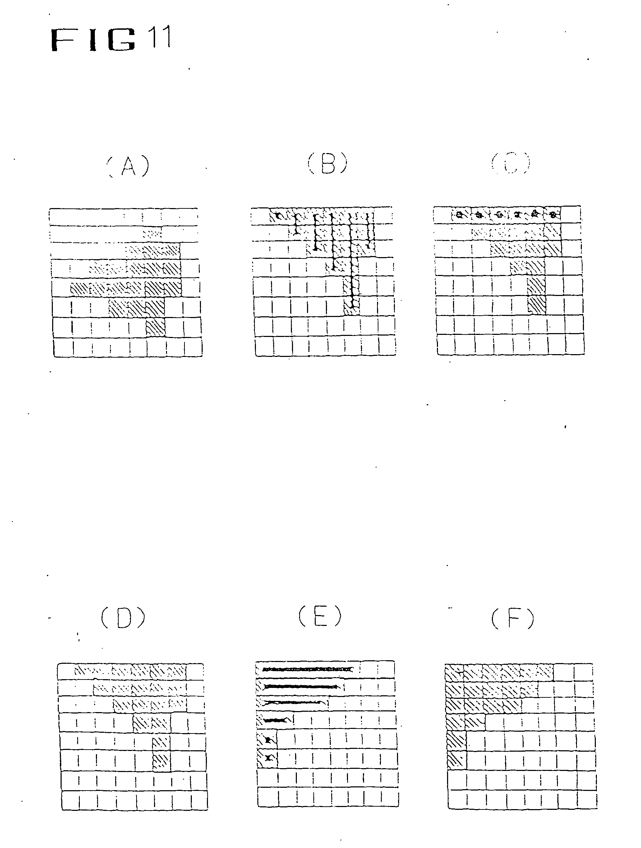

In FIG. 11A, an MF object (hatched portion) is shown within the 8×8 block. In order to Shape-Adaptive DCT code the MF object, the object is filled in the top border of the block, and one-dimensional DCT coded vertically, that is, along the Y axis, as shown in FIG. 11B. The dark circles of FIG. 11C indicate the DC values of vertical one-dimensional DCT. In this condition, one-dimensional DCT is performed along the Y axis.

After the Y-axis one-dimensional DCT, the object is filled in the left border of the block, as shown in FIG. 11E, and then one-dimensionally DCT coded horizontally, that is, along the X axis. After the X-axis one-dimensional DCT, x-axis and Y-axis one-dimensional DCT are completed as in FIG. 11F. The final form of FIG. 9F is zigzag-scanned, and the moving object is zigzag scanned from the top left block.

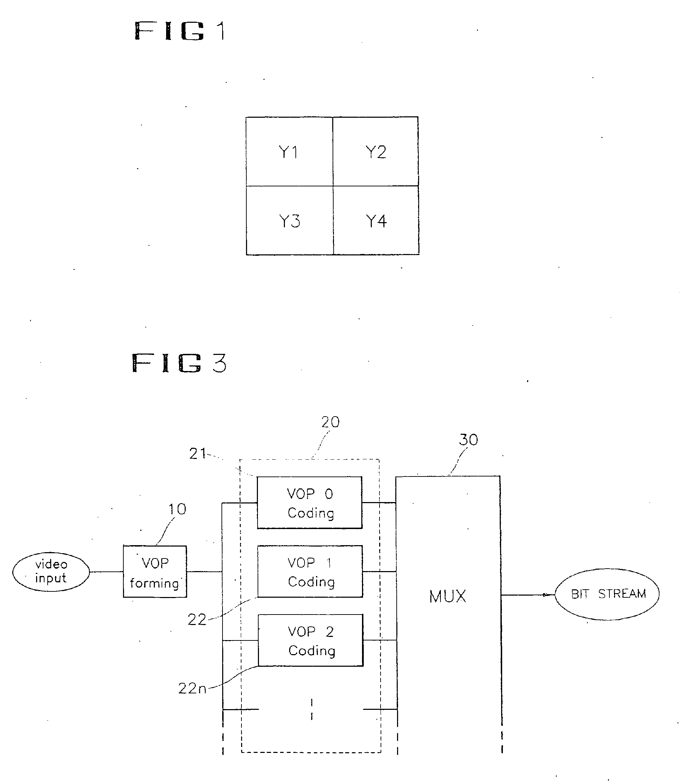

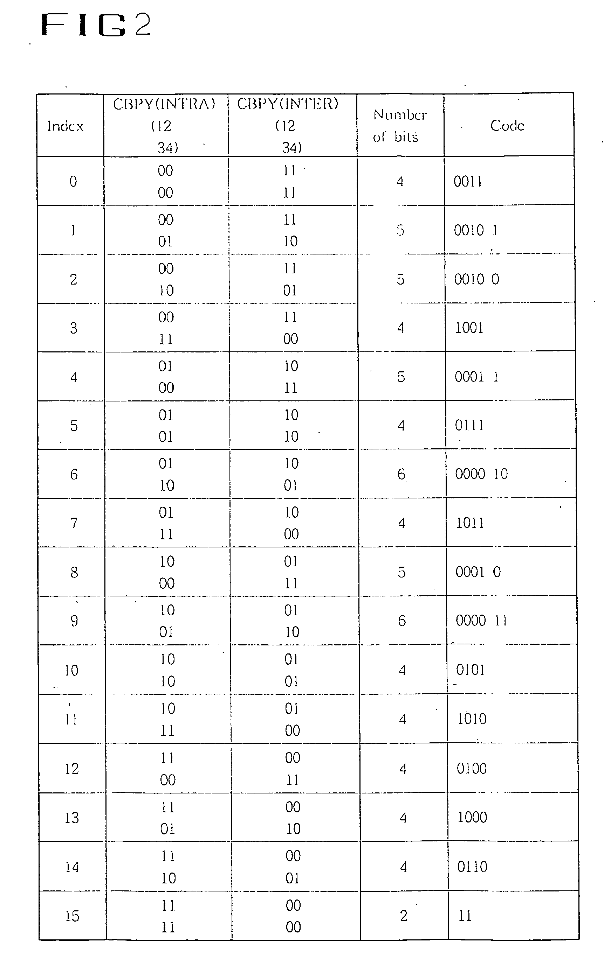

In the conventional standards like MPEG-1, MPEG-2, JPEG, H.261, and H.263 using the block coding, macro block MB of FIG. 1 is used. In this case four blocks Y1, Y2, Y3 and Y4 are present within one macro block, as shown in FIG. 1. In case of coding the four blocks of macro block MB, data may or may not exist in the blocks. According to the conventional standards, a coded block pattern is used in order to indicate whether data is present in the block or not. FIG. 2 is a variable length coding table for the coded block pattern used in H.263. This method effectively indicates whether data is present in the block or not, and reduces the amount of data transmitted.

However, such object-oriented coding decreases the efficiency of reduction of data transmitted because it applies the same variable length coding table for the code block pattern, which is used in order to indicate whether data exists or not in a macro block. In other words, the data reduction efficiency decreases because the same variable length coding table is applied even though the number of objects is differently distributed within a macro block (for instance, an object may be present only in part of the macro block or in the entire block).

### SUMMARY OF THE INVENTION

Accordingly, the present invention is directed to a method of generating an object-oriented code block pattern that substantially obviates one or more of the problems due to limitations and disadvantages of the related art.

Therefore, it is an object of the present invention to provide a method of generating an object-oriented code block pattern which enhances the efficiency of reduction of data transmitted by applying different variable-length coding tables for block pattern according to the number of object blocks where the object is present in a macro block.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, there is provided a method of generating an object-oriented code block pattern wherein different variable length coding tables for block pattern are applied according to the number of unit blocks where an object is present in case it is selectively present in the unit blocks of respective macro blocks where a frame of image is divided, to thereby reduce the amount of data transmitted.

If an object is present selectively in unit blocks of a macro block, different variable length coding tables for block pattern are then applied to the respective unit blocks where the object is present, in order to reduce the amount of data transmitted and enhance the coding efficiency.

It is to be understood that both the foregoing general description and the following detailed description are exemplary and explanatory and are intended to provide further explanation of the invention as claimed.

### BRIEF DESCRIPTION OF THE ATTACHED DRAWINGS

The accompanying drawings, which are included to provide a further understanding of the invention and are incorporated in and constitute a part of this specification, illustrate embodiments of the invention and together with the description serve to explain the concepts of the drawings.

In the drawings:
FIG. 1 shows four blocks (Y1, Y2, Y3, Y4) in one macro block used in the standards like MPEG-1, MPEF-2, H.261 and H.263.
FIG. 2 shows a variable length coding table for a code block pattern used in H.263.
FIG. 3 is a block diagram of a video coding system to which the present invention is applied.
FIG. 4 is a detailed circuit diagram of one of the encoders of FIG. 3
FIG. 5A shows an image divided into macro blocks.
FIG. 5B shows an example of an object divided into macro blocks.
FIG. 6 shows sub-blocks of macro blocks where the object is present in FIG. 3.
FIG. 7 shows a variable length coding table suggested in case that the object is present in three blocks of the macro block.
FIG. 8 shows another variable length coding table suggested in case that the object is present in two blocks of the macro block.
FIG. 9 shows another variable length coding table suggested in case that the object is present in one block of the macro block.
FIGS. 10A and 10B show a general frame grid.
FIGS. 11A-11F are diagrams of explaining the procedure of Shape-Adaptive DCT(SADCT) transformation.

### DETAILED DESCRIPTION OF PREFERRED EMBODIMENT

Reference will now be made in detail to the preferred embodiments of the present invention, examples of which are illustrated in the accompanying drawings.

A system to which the present invention is applied is a general video coding system shown in FIG. 3. This system includes a VOP formation portion 10 for dividing a frame of image by objects, a coding portion 20 for coding shape information of the respective objects obtained from VOP formation portion 10, and a multiplexer 30 for multiplexing an image coded and obtained from encoders 210-21n of coding portion 20. A frame of image information input to the image input means of VOP formation portion 10 is divided by objects, and shape information is encoded by objects in encoders 210-21n of coding portion 30.

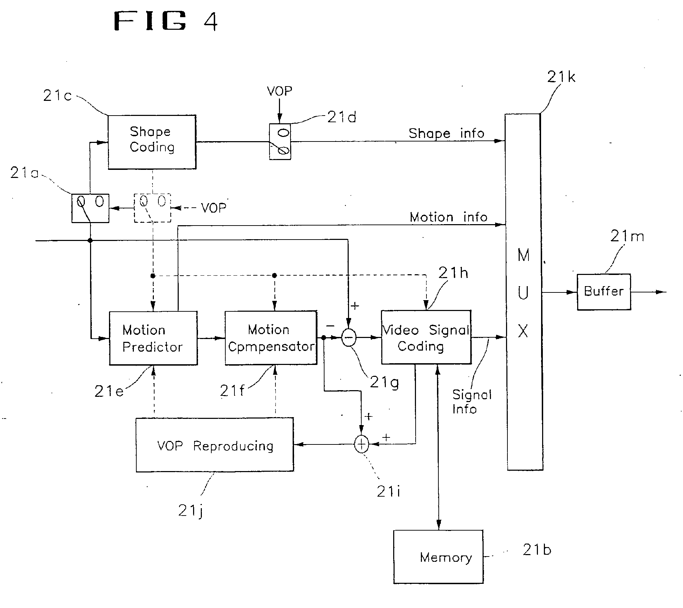

Here, as shown in FIG. 4, encoder 21 of coding portion 20 comprises a switch 21a for selecting object's shape information, an object's shape coding portion 21c for encoding the object's shape information selected by switch 21a, a selection switch 21d for selecting shape information encoded by shape information coding portion 21c and predetermined shape information, a motion predicting portion 21e for predicting the motion of shape information selected by switch 21a according to previous shape information or predetermined shape information, a motion compensator 21f for compensating for the motion of shape information according to the amount of motion predicted by motion predicting portion 21e, a subtractor 21g for subtracting the image compensated for by motion compensator 21f from the image obtained from VOP formation portion 10, an image signal coding portion 21h for coding the image signal obtained by subtractor 21g, an adder 21i for adding the image information obtained by image signal coding portion 21h to the image signal motion-compensated by motion compensator 21f, a VOP reproducing portion 21j for reproducing VOP with the image signal obtained by adder 21i, and a memory 21b for storing different variable length coding tables for block pattern according to the number of blocks where the object is present in a macro block.

The encoder selects object' shape information obtained by VOP formation portion 10 with switch 21a, and the selected shape information is encoded in shape information coding portion 21c. Selection switch 21d selects the VOP of the coded shape information and predetermined shape information, and transmits it to multiplexer 21k. Here, video signal coding portion 21h generates a code block pattern by selectively applying a variable-length coding table for block pattern stored in memory 21b according to the number of blocks where the object is present in a macro block. Motion predicting portion 21e predicts the motion of the shape information obtained by VOP formation portion 10, and motion compensator 21f compensates for motion according to the predicted amount of motion of object.

The motion-compensated image is subtracted from the object's shape information obtained by VOP formation portion 10 in subtractor 21g, and the image signal is encoded by image signal coding portion 21h and transmitted to multiplexer 21k.

The image signal encoded by image signal coding portion 21h is added to the motion-compensated image signal in adder 21i, and then reproduced to the previous VOP in VOP reproducing portion 21j. According to the VOP reproduced, motion predicting portion 21e predicts the motion of the object's shape information obtained by VOP formation portion 10, and transmits the predicted motion information to multiplexer 21k.

Multiplexer 21k multiplexes the coded shape information, motion information and signal information, and the signals multiplexed are buffered by buffer 21m and then transmitted to a decoder. Here, the gist of the present invention is to selectively apply a plurality of variable length coding tables stored in memory 21b according to the number of object present in the unit blocks of the macro block. From now on, a preferred embodiment of the present invention will be described.

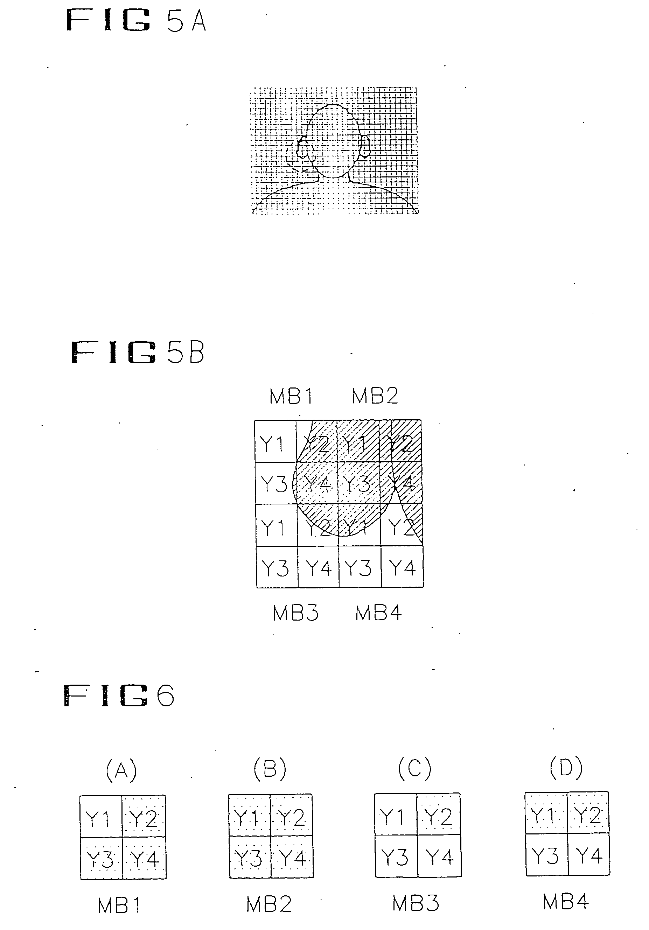

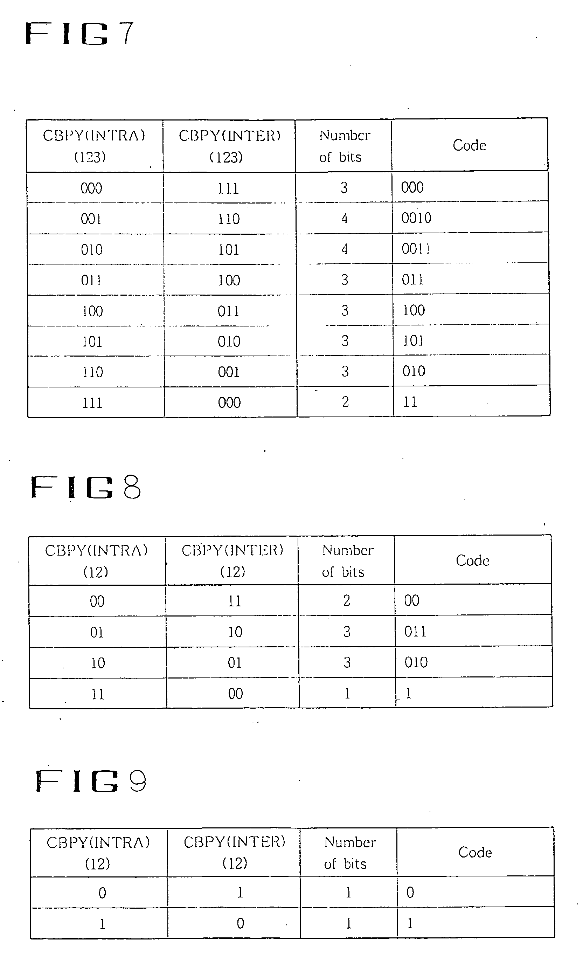

If an object is divided in units of macro block, some blocks contain the object and other do not because the object is not rectangular as shown in FIG. 5. FIG. 6 shows blocks having the object or blocks having not object within a macro block.

In macro block MB1 shown in FIG. 6A, the object is present in blocks Y2, Y3 and Y4 other than block Y1. In macro block MB2 shown in FIG. 6B, the object is present in all the unit blocks Y1, Y2, Y3 and Y4. In macro block MB3, the object is present only in unit block Y2. In macro block MB4, the object is present only in unit blocks Y1 and Y2. As shown above, the object is selectively present in unit blocks of the macro block so that different variable length coding tables are applied to the respective cases, in order to enhance coding gain and data compression efficiency.

More specifically, in case that the object is present in three blocks Y2, Y3 and Y4 of macro block MB1, the variable length coding table of FIG. 7 is applied. In case that the object is present in all the unit blocks Y1, Y2, Y3 and Y4 of macro block MB2, the conventional variable length coding table is applied. If the object is present only in unit block Y2 of macro block MB3, the variable length coding table of FIG. 8 is applied. To macro block MB4 where the object is present only in two unit blocks Y1 and Y2, the variable length coding table of FIG. 9 is applied. Accordingly, different variable length coding tables (variable length coding tables having the best coding gains) are applied to the respective macro blocks according to the number of their unit blocks where the object is present, so that data reduction efficiency and coding gain are improved.

The variable length coding tables of FIGS. 7, 8 and 9 are suggested through experiments. Here, terms INTRA and INTER are defined as below.

The characteristics of object on time axis are classified into a case (object type I) of object appearing in the present frame while absent in the previous frame, a case (object type II) of very small (within 10 pixels) object, and a case (object type III) of relatively large (at least 10 pixels) object. Here, the coding type of object types I and II is determined as INTRA mode (non-prediction mode), and the coding type of the other case is determined as INTER mode (prediction mode).

As described above, different variable length coding tables having the best coding gains are applied to the respective macro blocks according to the number of their unit blocks where the object is present, so that the efficiency of reduction of data transmitted and its coding gain are improved.

It will be apparent to those skilled in the art that various modifications and variations can be made in an object's shape information coding of the present invention without departing from the spirit or scope of the invention. Thus, it is intended that the present invention cover the modifications and variations of this invention provided they come within the scope of the appended claims and their equivalents.

## Claims

1. An apparatus for coding luminance information in a block format by adaptively using different variable length code(VLC) tables according to the number of non transparent block in a macroblock to be coded, said apparatus comprising:
a coded block pattern decision unit for determining a coded block pattern for lumananee(CBPY) indicating whether or not coded texture data is transmitted for each of plural luminance blocks;
a VLC table memory for storing the different VLC tables corresponding to the number of non transparent blocks in the macroblock, each of the VLC tables having variable length codes representing each of coded block pattern for luminance; and
a multiplexer for multiplexing the variable length code corresponding to the coded block pattern for luminance(CBPY) along with another macroblock header information.

2. The apparatus as recited in claim 1, wherein the non transparent block represents luminance block with at least one non intra DC transform coefficient.

3. The apparatus as recited in claim 1, wherein the macroblock comprises four blocks of 8 by 8 pixel size.

4. The apparatus as recited in claim 1, wherein said VLC table memory stores:
A first VLC table for one non-transparent in a macroblock;
a second VLC table for two non-transparent block in a macroblock;
a third VLC table for three non-transparent block in a macroblock; and
a fourth VLC table for four non-transparent block in a macroblock.

5. The apparatus as recited in claim 4, wherein the first VLC table is represented as follows:
| CBPY(INTRA) | CBPY(INTER) | CODE |
|---|---|---|
| 0 | 1 | 0 |
| 1 | 0 | 1 |

6. The apparatus as recited in claim 4, wherein the second VLC table is represented as follows:
| CBPY(INTRA) | CBPY(INTER) | CODE |
|---|---|---|
| 00 | 11 | 00 |
| 01 | 10 | 011 |
| 10 | 01 | 010 |
| 11 | 00 | 1 |

7. The apparatus as recited in claim 4, wherein the third VLC table is represented as follows:
| CBPY(INTRA) | CBPY(INTER) | CODE |
|---|---|---|
| 000 | 111 | 000 |
| 001 | 110 | 0010 |
| 010 | 101 | 0011 |
| 011 | 100 | 011 |
| 100 | 011 | 100 |
| 101 | 010 | 101 |
| 110 | 001 | 010 |
| 111 | 000 | 11 |

8. The apparatus as recited in claim 4, wherein the fourth VLC table is represented as follows:
| CBPY(INTRA) | CBPY(INTER) | CODE |
|---|---|---|
| 0000 | 1111 | 0011 |
| 0001 | 1110 | 00101 |
| 0010 | 1101 | 00100 |
| 0011 | 1100 | 1001 |
| 0100 | 1011 | 00011 |
| 0101 | 1010 | 0111 |
| 0110 | 1001 | 000010 |
| 0111 | 1000 | 1011 |
| 1000 | 0111 | 00010 |
| 1001 | 0110 | 000011 |
| 1010 | 0101 | 0101 |
| 1011 | 0100 | 1010 |
| 1100 | 0011 | 0100 |
| 1101 | 0010 | 1000 |
| 1110 | 0001 | 0110 |
| 1111 | 0000 | 11 |

9. An apparatus for decoding luminance information in a block format by adaptively using different variable length code(VLC) tables according to the number of non transparent blocks in a macroblock to be decoded, said apparatus comprsing:
a de-multiplexer for retrieving a coded pattern for luminance(CBPY) for the macroblock from a received bitstream, wherein the coded block pattern indicates which of plural luminance blocks have DC transform coefficient data in the macroblock;
a texture decoder for decoding coded texture data using the coded block pattern for luminance(CBPY) for the macroblock, by skipping decoding for luminance blocks with no transmitted DC transform coefficients upon the coded block pattern for luminance(CBPY).

10. The apparatus as recited in claim 49, wherein non transparent blocks represent luminance blocks with at least one non intra DC transform coefficient in a macroblock.

11. The apparatus as recited in claim 19, wherein said variable length code(VLC) tables comprise:
a first VLC table for one non-transparent block in a macroblock;
a second VLC table for two non-transparent block in a macroblock;
a third VLC table for three non-transparent block in a macroblock; and
a fourth VLC table for four non-transparent block in a macroblock.

12. The apparatus as recited in claim 11, wherein the first VLC table is represented as follows:
| CBPY(INTRA) | CBPY(INTER) | CODE |
|---|---|---|
| 0 | 1 | 0 |
| 1 | 0 | 1 |

13. The apparatus as recited in claim 311, wherein the second VLC table is represented as follows:
| CBPY(INTRA) | CBPY(INTER) | CODE |
|---|---|---|
| 00 | 11 | 00 |
| 01 | 10 | 011 |
| 10 | 01 | 010 |
| 11 | 00 | 1 |

14. The apparatus as recited in claim 311, wherein the third VLC table is represented as follows:
| CBPY(INTRA) | CBPY(INTER) | CODE |
|---|---|---|
| 000 | 111 | 000 |
| 001 | 110 | 0010 |
| 010 | 101 | 0011 |
| 011 | 100 | 011 |
| 100 | 011 | 100 |
| 101 | 010 | 101 |
| 110 | 001 | 010 |
| 111 | 000 | 11 |

15. The apparatus as recited in claim 11, wherein the fourth VLC table is represented as follows:
| CBPY(INTRA) | CBPY(INTER) | CODE |
|---|---|---|
| 0000 | 1111 | 0011 |
| 0001 | 1110 | 00101 |
| 0010 | 1101 | 00100 |
| 0011 | 1100 | 1001 |
| 0100 | 1011 | 00011 |
| 0101 | 1010 | 0111 |
| 0110 | 1001 | 000010 |
| 0111 | 1000 | 1011 |
| 1000 | 0111 | 00010 |
| 1001 | 0110 | 000011 |
| 1010 | 0101 | 0101 |
| 1011 | 0100 | 1010 |
| 1100 | 0011 | 0100 |
| 1101 | 0010 | 1000 |
| 1110 | 0001 | 0110 |
| 1111 | 0000 | 11 |

16. A method for decoding luminance information in a block format by adaptively using different variable length code(VLC) tables according to the number of non transparent blocks in a macroblock to be decoded, the method comprsing steps of:
retrieving a coded pattern for luminance(CBPY) for the macroblock from a received bitstream, wherein the coded block pattern indicates which of plural luminance blocks have DC transform coefficient data in the macroblock;
decoding coded texture data using the coded block pattern for luminance(CBPY) for the macroblock, by skipping decoding for luminance blocks with no transmitted DC transform coefficients upon the coded block pattern for luminance(CBPY).

17. The method as recited in claim 16, wherein non transparent blocks represent luminance blocks with at least one non intra DC transform coefficient in a macroblock.

18. The method as recited in claim 16, wherein said variable length code(VLC) tables comprise:
a first VLC table for one non-transparent block in a macroblock;
a second VLC table for two non-transparent block in a macroblock;
a third VLC table for three non-transparent block in a macroblock; and
a fourth VLC table for four non-transparent block in a macroblock.

19. The method as recited in claim 18, wherein the first VLC table is represented as follows:
| CBPY(INTRA) | CBPY(INTER) | CODE |
|---|---|---|
| 0 | 1 | 0 |
| 1 | 0 | 1 |

20. The method as recited in claim 18, wherein the second VLC table is represented as follows:
| CBPY(INTRA) | CBPY(INTER) | CODE |
|---|---|---|
| 00 | 11 | 00 |
| 01 | 10 | 011 |
| 10 | 01 | 010 |
| 11 | 00 | 1 |

21. The method as recited in claim 18, wherein the third VLC table is represented as follows:
| CBPY(INTRA) | CBPY(INTER) | CODE |
|---|---|---|
| 000 | 111 | 000 |
| 001 | 110 | 0010 |
| 010 | 101 | 0011 |
| 011 | 100 | 011 |
| 100 | 011 | 100 |
| 101 | 010 | 101 |
| 110 | 001 | 010 |
| 111 | 000 | 11 |

22. The method as recited in claim 18, wherein the fourth VLC table is represented as follows:
| CBPY(INTRA) | CBPY(INTER) | CODE |
|---|---|---|
| 0000 | 1111 | 0011 |
| 0001 | 1110 | 00101 |
| 0010 | 1101 | 00100 |
| 0011 | 1100 | 1001 |
| 0100 | 1011 | 00011 |
| 0101 | 1010 | 0111 |
| 0110 | 1001 | 000010 |
| 0111 | 1000 | 1011 |
| 1000 | 0111 | 00010 |
| 1001 | 0110 | 000011 |
| 1010 | 0101 | 0101 |
| 1011 | 0100 | 1010 |
| 1100 | 0011 | 0100 |
| 1101 | 0010 | 1000 |
| 1110 | 0001 | 0110 |
| 1111 | 0000 | 11 |
